# EUROPÄISCHE PATENTSCHRIFT

(11) **EP 2 304 275 B1**
(45) Veröffentlichungstag und Bekanntmachung des Hinweises auf die Patenterteilung: **15.02.2012**
(21) Anmeldenummer: 09772320.9
(22) Anmeldetag: 18.06.2009
(51) Int. Cl.: F16H 61/02, F16H 61/16

(54) **VERFAHREN ZUM ANSTEUERN EINES SCHALTVORGANGES BEI EINEM AUTOMATISCHEN GETRIEBE EINES NUTZFAHRZEUGES**
METHOD FOR ACTUATING A SHIFTING OPERATION IN AN AUTOMATIC TRANSMISSION OF A UTILITY VEHICLE
PROCÉDÉ DE COMMANDE D'UNE OPÉRATION DE CHANGEMENT DE VITESSE DANS LA TRANSMISSION AUTOMATIQUE D'UN VÉHICULE UTILITAIRE

(30) Priorität: 03.07.2008 DE 102008040126
(43) Veröffentlichungstag der Anmeldung: 06.04.2011
(73) Patentinhaber: ZF Friedrichshafen AG, 88038 Friedrichshafen (DE)
(72) Erfinder: WOLFGANG, Werner, 88213 Ravensburg (DE); WENGERT, Bertram, 88677 Markdorf (DE); REITH, Ulrich, 88281 Schlier (DE); WÜRTHNER, Maik, 88048 Friedrichshafen (DE)
(86) Internationale Anmeldenummer: PCT/EP2009/057576
(87) Internationale Veröffentlichungsnummer: WO 2010/000620

(56) Entgegenhaltungen:
- DE-A1-102004 027 597
- US-A- 4 852 006
- US-A- 5 638 271
- US-A- 6 123 644

## Beschreibung

Die vorliegende Erfindung betrifft ein Verfahren zum Ansteuern eines Schaltvorganges bei einem automatischen Getriebe eines Nutzfahrzeuges gemäß der im Oberbegriff des Patentanspruches 1 näher definierten Art.

Aus der Fahrzeugtechnik sind Nutzfahrzeuge mit automatischen Getrieben bekannt. Die Fahrzeuge werden auch für Geländefahrten eingesetzt, z.B. im so genannten schweren Offroad. Derartige Anwendungen sind bei Baustellenfahrzeugen und auch bei Militärfahrzeugen im militärischen Einsatz möglich. Die der Getriebesteuerung beziehungsweise der Getriebeelektronik zugeordnete Fahrstrategie zur Sollgangbestimmung hat die Aufgabe in jeder Situation den optimalen Gang zu finden. Dazu wird neben der Fahrzeugmasse auch kontinuierlich der aktuell herrschende Fahrwiderstand aus physikalischen Größen berechnet, wie zum Beispiel aus dem aktuellen Motormoment und der Fahrzeuggeschwindigkeit. Bei Geländefahrten können sehr schnell extrem hohe Fahrwiderstände auftreten, z.B. beim Einfahren in eine große Steigung oder im Morast mit teilweise ein gesunkenen Rädern des Nutzfahrzeuges. In diesen Fahrsituationen werden bei Erreichen einer Schaltdrehzahl Zug-Rückschaltungen in einen kleineren Gang ausgelöst. Die nach der Schaltung erreichte Motordrehzahl lässt sich aufgrund der Übersetzungsänderung und des auch während der Schaltung wirkenden Fahrwiderstandes bereits vor der Schaltauslösung berechnen. Dies erfolgt durch die Ermittlung der Zieldrehzahl für den gewählten Sollgang. Dabei gibt die berechnete Zieldrehzahl eine obere Zieldrehzahlgrenze an, die nicht überschritten werden darf. Die Fahrstrategie berechnet den maximalen Gangsprung ohne diese obere Zieldrehzahlgrenze nach oben zu überschreiten. Aufgrund der Getriebeübersetzungen ist es in Extremsituationen möglich, dass sich nach der Rückschaltung sehr niedrige Drehzahlen ergeben, bei der das Motormoment für eine Weiterfahrt nicht ausreicht oder das Fahrzeug sogar zum Stillstand kommt. Dadurch ergibt sich für den Fahrer ein nicht vorhersehbarer offener Antriebsstrang, welches zu kritischen Fahrsituationen führen kann.

Beispielsweise aus der Druckschrift DE 10 2004 027 597 A1 ist ein Verfahren zur Steuerung eines automatisierten Schaltgetriebes während eines Übersetzungsänderungsvorgangs bekannt, bei dem die Synchrondrehzahl für den neuen Getriebegang beziehungsweise Sollgang unter der Leerlaufdrehzahl eines mit dem Getriebe verbindbaren Antriebsmotors liegt und bei dem ein Gangeinlegeaktuator zum Einlegen des neuen Getriebeganges dann aktiviert wird, wenn die Getriebeeingangsdrehzahl ein vordefiniertes Drehzahlfenster erreicht hat. Bei dem bekannten Verfahren wird der Schaltvorgang abweichend vom bisher üblichen Rückschaltmodus in einem Hochschaltmodus durchführt.

Der vorliegenden Erfindung liegt die Aufgabe zu Grunde, ein Verfahren der eingangs genannten Gattung vorzuschlagen, durch das der Ablauf eines Schaltvorganges derart beeinflusst wird, dass kritische Fahrsituationen verhindert werden.

Diese Aufgabe wird erfindungsgemäß durch die Merkmale des Patentanspruches 1 gelöst. Weitere vorteilhafte Ausgestaltungen ergeben sich aus den Unteransprüchen und den Zeichnungen.

Demnach wird ein Verfahren zum Ansteuern eines Schaltvorganges bei einem automatischen Getriebe eines Nutzfahrzeuges vorgeschlagen, wobei durch eine Getriebesteuerung ein Sollgang und eine dazugehörige Zieldrehzahl in Abhängigkeit von vorbestimmten Parametern ermittelt wird und wobei der Schaltvorgang bei Erreichen einer ermittelten Schaltdrehzahl durchgeführt wird. Erfindungsgemäß wird bei einem Schaltvorgang, z. B. einem Zug-Rückschaltvorgang, zumindest zeitweise eine Schaltsperre, z. B. eine Rück-Schaltsperre aktiviert, wenn beim Erreichen der Schaltdrehzahl die ermittelte Zieldrehzahl unterhalb einer vorbestimmten Grenzdrehzahl liegt.

Mit dem erfindungsgemäßen Verfahren wird vorzugsweise ein Rück-schaltvorgang verhindert beziehungsweise die Schaltsperre zumindest zeitweise aktiviert, solange eine Mindestdrehzahl nicht überschritten werden kann. Durch die aktivierte Schaltsperre können z. B. kritische Fahrsituationen verhindert werden und zudem kann dadurch der Fahrkomfort bei dem Fahrzeug deutlich erhöht werden.

Im Rahmen einer vorteilhaften Ausführungsvariante kann zum Beispiel bei einer Zug-Rückschaltung die Rück-Schaltsperre aktiv bleiben bis ein neuer Sollgang bestimmt wird, in dem die ermittelte Zieldrehzahl oberhalb der Grenzdrehzahl liegt. Auf diese Weise kann z. B. eine Zug-Rück-Schaltungsunterdrückung mit dem erfindungsgemäßen Verfahren realisiert werden. Demzufolge wird die beabsichtigte Schaltung nicht ausgelöst und somit die Rück-Schaltsperre aktiviert, wenn die berechnete Zieldrehzahl beim Erreichen der Schaltdrehzahl beziehungsweise der Synchrondrehzahl unterhalb eines mittels Parameter vorgegebenen Grenzwerts liegt.

Durch die aktive Rück-Schaltsperre bleibt der Antriebsstrang des Fahrzeuges geschlossen und der Antriebsmotor wird abgewürgt. Folglich können kritische Fahrsituationen durch einen nicht vorhersehbaren offenen Antriebsstrang bei dem erfindungsgemäßen Verfahren verhindert werden.

Gemäß einer vorteilhaften Ausgestaltung der Erfindung kann vorgesehen sein, dass eine aktive Rück-Schaltsperre wieder aufgehoben wird, sobald sich ein neuer Gang bestimmen lässt, bei dem die berechnete Zieldrehzahl zwischen der oberen und der unteren Zieldrehzahlgrenze liegt.

Die Grenzedrehzahl wird als untere Zieldrehzahlgrenze in Abhängigkeit von vorbestimmten Parametern bestimmt. Auf diese Weise können bestimmte Fahrsituationen und Fahrzeugzustände ausreichend berücksichtigt werden. Beispielsweise kann dabei die Fahrzeugmasse, der Fahrwiderstand, das aktuelle Motormoment, die Fahrzeuggeschwindigkeit oder dergleichen berücksichtigt werden. Es können auch noch andere Parameter verwendet werden.

Gemäß einer Weiterbildung kann der Bereich zwischen der oberen Zieldrehzahl und der unteren Zieldrehzahlgrenze in Abhängigkeit von der jeweiligen Fahrsituationen entsprechend gewählt werden. Es sind auch andere Fahrstrategien wählbar.

In vorteilhafter Weise kann das erfindungsgemäß vorgeschlagene Verfahren bei einem Nutzfahrzeug auch zum Beispiel im Straßeneinsatz verwendet werden. Durch die bei dem erfindungsgemäßen Verfahren realisierte Funktionalität kann auch die Schalthäufigkeit bei einem Straßeneinsatz des Fahrzeuges, zum Beispiel bei Onroad-Anwendungen reduziert werden. Dies erfolgt insbesondere dadurch, wenn über den Bereich zwischen der oberen und der unteren Zieldrehzahlgrenze der für die Fahrsituationen optimale Motordrehzahlbereich vorgegeben wird.

Nachfolgend wird die Erfindung anhand der Zeichnungen weiter erläutert. Es zeigen:
Fig. 1 ein Diagramm mit verschiedenen Drehzahlverläufen bei einer Zug-Rückschaltung ohne aktive Rück-Schaltsperre; und
Fig. 2 ein Diagramm mit verschiedenen Drehzahlverläufen mit einer aktiven Rück-Schaltsperre.

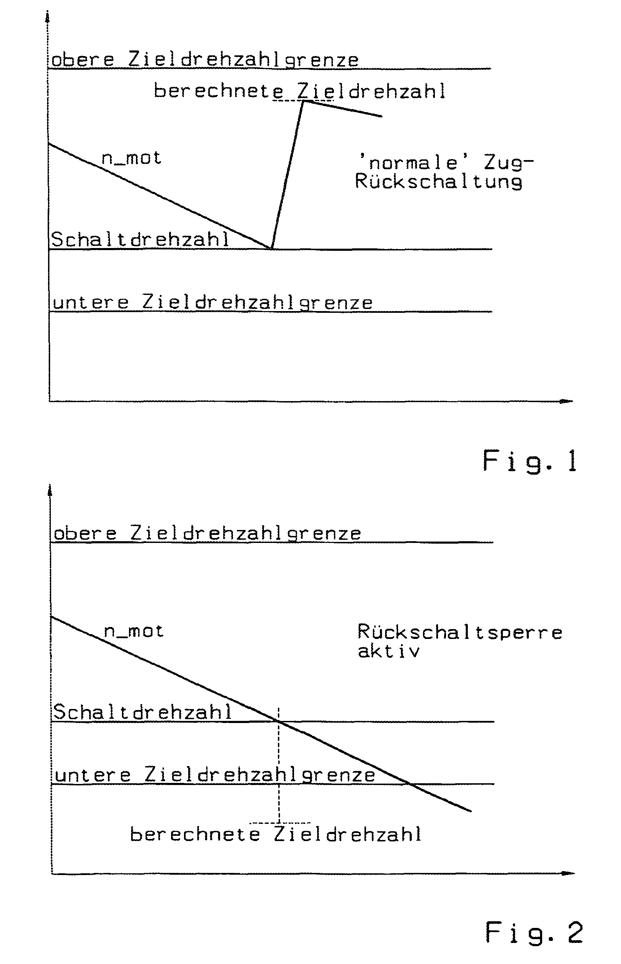

In Figur 1 ist ein Diagramm dargestellt, indem die Motordrehzahl n_mot über der Zeit dargestellt ist. Im Rahmen einer normalen Zug-Rückschaltung verringert sich die Motordrehzahl n_mot bis die Schaltdrehzahl erreicht wird. Dann wird die Rückschaltung im Rahmen des Schaltvorganges durchgeführt. Danach wird die Motordrehzahl n_mot auf die berechnete Zieldrehzahl erhöht, um dann den normalen Drehzahlverlauf zu erreichen. Bei der in Figur 1 dargestellten normalen Zug-Rückschaltung liegt die Schaltdrehzahl oberhalb einer unteren Zieldrehzahlgrenze. Deshalb wird in diesem Fall die Rück-Schaltsperre nicht aktiviert.

In Figur 2 ist ein weiteres Diagramm dargestellt, indem auch die Motordrehzahl n_mot über der Zeit dargestellt ist. Jedoch repräsentiert der Motordrehzahlverlauf eine Zug-Rückschaltung mit aktiver Rück-Schaltsperre. Auch in diesem Fall wird zunächst die Motordrehzahl n_mot reduziert, bis die Schaltdrehzahl erreicht wird. Im Gegensatz zu der normalen Zug-Rückschaltung gemäß Figur 1 liegt hier jedoch die berechnete Zieldrehzahl unterhalb der unteren Zieldrehzahlgrenze. Dies bedeutet, dass bei dem erfindungsgemäßen Verfahren die Rück-Schaltsperre aktiviert wird, so dass keine Rückschaltung in den gewählten Sollgang erfolgt. Demnach wird die Motordrehzahl n_mot weiter reduziert, da der Antriebsstrang geschlossen bleibt. Schließlich wird der Antriebsmotor abgewürgt. Auf diese Weise wird eine sicherheitskritische Fahrsituation vermieden.

### Bezugszeichen

- n: Drehzahl
- t: Zeit
- n_mot: Motordrehzahl

## Patentansprüche

1. Verfahren zum Ansteuern eines Schaltvorganges bei einem automatischen Getriebe eines Nutzfahrzeuges, wobei durch eine Getriebesteuerung ein Sollgang und eine dazugehörige Zieldrehzahl in Abhängigkeit von vorbestimmten Parametern ermittelt wird und wobei der Schaltvorgang bei Erreichen einer ermittelten Schaltdrehzahl durchgeführt wird, **dadurch gekennzeichnet, dass** bei einem Rück-Schaltvorgang zumindest zeitweise eine Schaltsperre aktiviert wird, wenn beim Erreichen der Schaltdrehzahl die ermittelte Zieldrehzahl unterhalb einer vorbestimmten Grenzdrehzahl liegt, welche als untere Zieldrehzahlgrenze in Abhängigkeit von vorbestimmten Parametern bestimmt wird.

2. Verfahren nach Anspruch 1, **dadurch gekennzeichnet, dass** bei einer Zug-Rückschaltung eine Rück-Schaltsperre aktiv bleibt, bis ein neuer Sollgang bestimmt wird, in dem die ermittelte Zieldrehzahl oberhalb der Grenzdrehzahl liegt.

3. Verfahren nach Anspruch 2, **dadurch gekennzeichnet, dass** durch die aktive Rück-Schaltsperre der Antriebsstrang des Fahrzeuges geschlossen bleibt und der Antriebsmotor abgewürgt wird.

4. Verfahren nach Anspruch 3, **dadurch gekennzeichnet, dass** die aktive Rück-Schaltsperre wieder aufgehoben wird, sobald sich ein Sollgang bestimmt wird, bei dem die berechnete Zieldrehzahl zwischen der oberen und der unteren Zieldrehzahlgrenze liegt.

5. Verfahren nach einem der vorangehenden Ansprüche, **dadurch gekennzeichnet, dass** der Bereich zwischen der oberen Zieldrehzahl und der unteren Zieldrehzahlgrenze in Abhängigkeit von der jeweiligen Fahrsituation gewählt wird.

## Claims

1. Method for actuating a shifting operation in an automatic transmission of a utility vehicle, wherein a setpoint gearspeed and an associated target rotational speed are identified by means of a transmission controller as a function of predetermined parameters, and wherein the shifting operation is carried out when an identified shifting rotational speed is reached, **characterized in that** during a shifting back operation a shifting lock is at least temporarily activated if, when the shifting rotational speed is reached, the identified target rotational speed is below a predetermined limiting rotational speed which is determined as a lower target rotational speed limit as a function of predetermined parameters.

2. Method according to Claim 1, **characterized in that** during a traction shifting back operation a shifting back lock remains active until a new setpoint gearspeed at which the identified target rotational speed is above the limiting rotational speed is determined.

3. Method according to Claim 2, **characterized in that** as a result of the active shifting back lock the drive train of the vehicle remains closed and the drive engine is choked.

4. Method according to Claim 3, **characterized in that** the active shifting back lock is cancelled again as soon as a setpoint gearspeed at which the calculated target rotational speed is between the upper and the lower target rotational speed limits is determined.

5. Method according to one of the preceding claims, **characterized in that** the range between the upper target rotational speed and the lower target rotational speed limit is selected as a function of the respective driving situation.

## Revendications

1. Procédé pour commander une opération de changement de vitesse dans une transmission automatique d'un véhicule utilitaire, dans lequel un rapport de consigne et un régime cible associé sont déterminés par une commande de transmission en fonction de paramètres prédéterminés, et dans lequel l'opération de changement de vitesse est effectuée à l'obtention d'un régime de changement de vitesse déterminé, **caractérisé en ce que** dans le cas d'une opération de rétrogradage, au moins temporairement un mécanisme de verrouillage de changement de vitesse est activé, si, à l'obtention du régime de changement de vitesse, le régime cible déterminé est en dessous d'un régime limite prédéterminé, qui est déterminé en tant que limite inférieure de régime cible en fonction de paramètres prédéterminés.

2. Procédé selon la revendication 1, **caractérisé en ce que** dans le cas d'un rétrogradage en traction, un mécanisme de verrouillage de changement de vitesse en rétrogradage reste actif, jusqu'à ce qu'un nouveau rapport de consigne soit déterminé, dans lequel le régime cible déterminé est au-dessus du régime limite.

3. Procédé selon la revendication 2, **caractérisé en ce que** du fait du mécanisme de verrouillage de changement de vitesse en rétrogradage actif, la chaîne cinématique du véhicule reste fermée et le moteur d'entraînement cale.

4. Procédé selon la revendication 3, **caractérisé en ce que** le mécanisme de verrouillage de changement de vitesse actif est à nouveau supprimé dès qu'un rapport de consigne est déterminé, auquel le régime cible calculé se situe entre la limite supérieure de régime cible et la limite inférieure de régime cible.

5. Procédé selon l'une quelconque des revendications précédentes, **caractérisé en ce que** la plage entre la limite de régime cible supérieure et la limite de régime cible inférieure est choisie en fonction de la situation de conduite particulière.
